# EUROPÄISCHE PATENTSCHRIFT

(11) **EP 3 008 300 B1**
(45) Veröffentlichungstag und Bekanntmachung des Hinweises auf die Patenterteilung: **08.03.2017**
(21) Anmeldenummer: 14718128.3
(22) Anmeldetag: 17.04.2014
(51) Int. Cl.: F01L 1/047, F02D 13/02, F02B 25/02

(54) **BRENNKRAFTMASCHINE UND VERFAHREN ZUM WECHSEL DER BETRIEBSART EINER SOLCHEN BRENNKRAFTMASCHINE VON EINEM NORMALBETRIEB IN EINEN SCAVENGINGBETRIEB**
INTERNAL COMBUSTION ENGINE AND METHOD FOR SWITCHING OF OPERATING MODE OF THE ENGINE FROM NORMAL OPERATION TO A SCAVENGING MODE
MOTEUR A COMBUSTION INTERNE ET PROCÉDÉ POUR CHANGER LE MODE DE FONCTIONNEMENT DU MOTEUR ET PASSER D'UN FONCTIONNEMENT NORMAL À UN MODE DE FONCTIONNEMENT AVEC BALAYAGE

(30) Priorität: 13.06.2013 DE 102013009896
(43) Veröffentlichungstag der Anmeldung: 20.04.2016
(73) Patentinhaber: Volkswagen Aktiengesellschaft, 38440 Wolfsburg (DE)
(72) Erfinder: SCHMIDT, Thorsten, 38106 Braunschweig (DE); SIPPEL, Simon, 38170 Kneitlingen (DE); GROENENDIJK, Axel, 38518 Gifhorn (DE)
(86) Internationale Anmeldenummer: PCT/EP2014/057968
(87) Internationale Veröffentlichungsnummer: WO 2014/198449

(56) Entgegenhaltungen:
- EP-A1- 0 075 502
- EP-A1- 1 544 434
- DE-A1-102011 014 308
- DE-B3-102004 030 605
- FR-A1- 2 922 955
- US-A1- 2003 164 163
- US-A1- 2009 194 080
- US-A1- 2011 174 248

## Beschreibung

Die Erfindung betrifft ein Verfahren zum Wechsel der Betriebsart einer Brennkraftmaschine von einem Normalbetrieb in einen Scavengingbetrieb.

Es ist bekannt, Brennkraftmaschinen, wie sie beispielsweise für den Antrieb von Kraftfahrzeugen genutzt werden, mit einer Aufladung durch beispielsweise Abgasturbolader auszustatten. Durch die Aufladung wird der Druck des einem Verbrennungsmotor der Brennkraftmaschine zugeführten Frischgases erhöht, wodurch sich die Füllung der Brennräume, damit die Menge des pro Arbeitstakt umsetzbaren Kraftstoffs und folglich die Leistung der Brennkraftmaschine erhöht. Zusätzlich kann durch eine Aufladung der Wirkungsgrad insbesondere einer Diesel-Brennkraftmaschine erhöht werden.

Weiterhin ist es bekannt, einen Teil des Abgases in den Frischgasstrang zurück zu führen, wo dieses mit dem Frischgas wieder in die Brennräume des Verbrennungsmotors eingebracht wird. Dadurch können die bei der Verbrennung in den Brennräumen auftretenden Spitzentemperaturen gesenkt werden. Dies führt zu einer Verringerung von Stickoxiden (NOₓ) in dem Abgas. Neben einer "externen" Abgasrückführung (AGR), die hauptsächlich bei DieselBrennkraftmaschinen eingesetzt wird, ist von Otto-Brennkraftmaschinen auch die Umsetzung einer "internen" AGR bekannt (vgl. DE 10 2005 053 940 A1), bei der ein Zurückführen von Abgas in die Brennräume des Verbrennungsmotors durch Beeinflussung der Ventilsteuerzeiten mittels eines variablen Ventiltrieb zur Erzielung einer Ventilüberschneidung realisiert wird. Dabei muss, um ein Rückströmen des Abgases zu ermöglichen, während der Ventilüberschneidung ein Druckgefälle vom Abgasstrang zum Frischgasstrang herrschen. Vorteile der internen AGR gegenüber der externen AGR können sich aus den kurzen Wegen und den schnellen Reaktionszeiten sowie der direkten Dosierbarkeit ergeben. Nachteilig kann sich allerdings das Fehlen der Möglichkeit einer wirksamen Abkühlung des rückgeführten Abgases, wie dies bei einer externen AGR möglich ist, erweisen.

Der Ventiltrieb für eine Viertakt-Kolbenbrennkraftmaschine umfasst regelmäßig mindestens ein, vielfach zwei Einlass- und Auslassventile für jeden Zylinder der Brennkraftmaschine. Diese Einlass- und Auslassventile werden zumeist über Nockenwellen gesteuert, wobei bei Brennkraftmaschinen mit mehr als zwei Ventilen pro Zylinder regelmäßig zwei Nockenwellen zum Einsatz kommen. Vielfach ist die Anordnung dieser Nockenwellen derart, dass eine davon sämtliche Einlassventile und die andere sämtliche Auslassventile steuert.

Bekannt sind aber auch Brennkraftmaschinen, bei denen die Nockenwellen jeweils sowohl Einlass- als auch Auslassventile steuern. Diese werden vielfach als "gemischte" Nockenwellen bezeichnet.

Aus der DE 199 08 286 A1 ist ein Ventiltrieb bekannt, bei dem ein rohrförmiger Nockenträger drehfest und axial verschiebbar auf einer Grundwelle angeordnet ist. Der Nockenträger bildet axial versetzt zwei Nocken mit unterschiedlichen Nockenlaufbahnen aus. Durch das axiale Verschieben des Nockenträgers auf der Grundwelle kann ein Gaswechselventil durch die unterschiedlich geformten Nockenlaufbahnen in unterschiedlicher Weise betätigt werden.

Ein solcher Ventiltrieb kann dazu genutzt werden, ein sogenanntes "Scavenging" umzusetzen, bei dem durch eine Überschneidung der Öffnungszeiten der Einlass- und Auslassventile der einzelnen Zylinder in Zeiten eines Überdrucks in dem Frischgasstrang im Vergleich zu dem Druck im Abgasstrang Abgas, das in den Zylindern verblieben ist, und gegebenenfalls etwas Frischgas in den Abgasstrang abzuführen. Ein solches Verfahren, umgesetzt bei einer Diesel-Brennkraftmaschine, ist aus der US 2009/0194080 A1 bekannt. Dort wird die für das Scavenging genutzte Ventilüberschneidung durch schaltbare Zusatznocken für die Einlassventile realisiert, die bei einem Betrieb der Brennkraftmaschine in einem dafür vorgesehenen Betriebsbereich (niedrige Drehzahlen mit mittleren bis hohen Lasten), aktiviert werden und ein zusätzliches Öffnen der Einlassventile während des Auslasstakts und somit in Überschneidung mit einem Öffnen der Auslassventile bewirken. Durch das Scavenging kann der Abgasmassenstrom durch die Turbine des Abgasturboladers und damit auch der vom Verdichter des Abgasturboladers geförderte Massenstrom erhöht werden. Dies kann gleichzeitig den Wirkungsgrad des Abgasturboladers, damit den Ladedruck und dadurch das erzielbare Drehmoment der Brennkraftmaschine erhöhen.

Die Schriften FR 2 922 955 A1 und US 2003/164163 A1 zeigen das Wiederöffnen eines Auslassventils während eines Ansaugtakts mittels eines schaltbaren Ventiltriebs zur Realisierung von "interner" EGR.

Die Schrift DE 694 05 247 T2 zeigt ein Verfahren zum Betrieb eines Verbrennungsmotors, wonach ein Auslassventil während des Ansaugtakts geöffnet ist, damit eine Phase niedrigen Abgasdrucks, insbesondere eines Abgasdrucks, der geringer als der mittlere Ladedruck ist, eine Durchspülung eines Zylinders bewirken kann. Für das Wiederöffnen des Auslassventils im Ansaugtakt ist ein Ventilnocken mit einem Hauptnockenhub und einem Nachnockenhub offenbart. Ein Betrieb des Verbrennungsmotors ohne den Nachnockenhub, insbesondere ein wahlweises Betreiben des Verbrennungsmotors mit oder ohne den Nachnockenhub, ist nicht offenbart. Das Dokument EP 0 075 502 A1 zeigt ebenso ein derartiges Verfahren.

Und schließlich ist in der EP 1 424 474 A1 beschrieben, einen Diesei-Viertakt-Verbrennungsmotor zeitweise in einem abgeleiteten Atkinson-Zyklus zu betreiben, indem in der ersten Hälfte des Verdichtungstakts der einzelnen Zylinder, die zugehörigen Auslassventile erneut kurz geöffnet werden. Dadurch wird jeweils ein Teil des in dem Brennraum enthaltenen Frischgases ausgestoßen und im Ergebnis die erzielte Verdichtung reduziert.

Ausgehend von diesem Stand der Technik lag der Erfindung die Aufgabe zugrunde, bei einer Brennkraftmaschine mit einem Viertaktverbrennungsmotor, insbesondere Diesel-Brennkraftmaschine, das Drehmoment bei niedrigen Drehzahlen zu erhöhen.

Diese Aufgabe wird durch ein Verfahren zum Wechsel der Betriebsart einer Brennkraftmaschine gemäß dem unabhängigen Patentanspruch 1 gelöst. Vorteilhafte Ausgestaltungen des erfindungsgemäßen Verfahrens sind Gegenstand der abhängigen Patentansprüche und ergeben sich aus der nachfolgenden Beschreibung der Erfindung.

Der Erfindung liegt die Erkenntnis zugrunde, dass nicht nur während des Ausstoßtakts sondern auch während des Ansaugtakts temporär ein Druckgefälle von dem Frischgasstrang zum Abgasstrang herrscht, das mittels einer Ventilüberschneidung sinnvoll für ein Scavenging genutzt werden kann, um das Drehmoment einer Brennkraftmaschine zu erhöhen.

Eine gattungsgemäße Brennkraftmaschine mit einem Viertakt-Verbrennungsmotor, einem Frischgasstrang und einem Abgasstrang, wobei für (mindestens) einen Zylinder des Verbrennungsmotors die Zufuhr von Frischgas mittels (mindestens) eines Einlassventils gesteuert wird und die Abfuhr von Abgas mittels (mindestens) eines Auslassventils gesteuert wird, wobei Auslassbetätigungsmittel vorgesehen sind, die während eines Ausstoßtakts das Auslassventil öffnen, und wobei Einlassbetätigungsmittel vorgesehen sind, die das Einlassventil während eines Ansaugtakts öffnen, ist demnach erfindungsgemäß dadurch weitergebildet, dass Mittel zum erneuten (d.h. zusätzlich zum (Haupt-)Öffnen während des Auslasstakts) Öffnen des Auslassventils durch die Auslassbetätigungsmittel während des Ansaugtakts in (zumindest) einem Zeitraum, wenn ein Druckgefälle vom Frischgasstrang zum Abgasstrang herrscht, vorgesehen sind.

Dabei erfolgt das erneute Öffnen des Auslassventils vorzugsweise nachdem dieses nach dem zuvor erfolgten Hauptöffnen während des Ausstoßtakts bereits weitgehend vollständig geschlossen hatte. Zudem ist vorzugsweise vorgesehen, dass das Schließen des Auslassventils nach dem erneuten Öffnen noch innerhalb des Ansaugtakts abgeschlossen wird.

Da dass durch die erfindungsgemäße Ausgestaltung ermöglichte Scavenging während des Ansaugtakts insbesondere zur Erhöhung der Leistung eines Abgasturboladers führen kann, ist vorzugsweise vorgesehen, dass die erfindungsgemäße Brennkraftmaschine mittels eines Abgasturboladers aufgeladen ist. Diese weist dann eine in den Abgasstrang integrierte Turbine und einen in den Frischgasstrang integrierten Verdichter auf, wobei eine Rotation eines Turbinenlaufrads auf ein Verdichterlaufrad mittels einer Welle übertragen wird.

Durch die Ventilüberschneidung von Einlass- und Auslassventil in Verbindung mit dem Druckgefälle vom Frischgasstrang zum Abgasstrang kann ein Spülen des in dem Zylinder ausgebildeten Brennraums sowie ein Überströmen von Frischgas in den Abgasstrang und damit ein zusätzlicher Gasmassenstrom im Abgasstrang erreicht werden, der in bekannter Weise, wie dies vom Scavenging gemäß der US 2009/0194080 A1 bekannt ist, zu einer Erhöhung des von dem Verbrennungsmotor erzeugten Drehmoments, insbesondere bei niedrigen Drehzahlen und mittleren bis hohen Lasten, führen kann.

Eine besonders ausgeprägte Erhöhung des von dem Verbrennungsmotor erzeugten Drehmoments kann realisiert werden, indem das erfindungsgemäße Scavenging während des Ansaugtakts mit dem bekannten Scavenging während des Ausstoßtakts kombiniert wird. Demnach sind bei der erfindungsgemäßen Brennkraftmaschine vorzugsweise noch Mittel zum erneuten Öffnen des Einlassventils durch die Einlassbetätigungsmittel während des Ausstoßtakts in (zumindest) einem Zeitraum, wenn ein Druckgefälle vom Frischgasstrang zum Abgasstrang herrscht, vorgesehen.

Ein Scavenging ist regelmäßig nur in bestimmten Betriebsbereichen (im Betriebskennfeld) des Verbrennungsmotors sinnvoll, während dieses in anderen Betriebsbereichen des Verbrennungsmotors nicht zur Anwendung kommen soll. Dementsprechend kann in einer bevorzugten Ausführungsform der erfindungsgemäßen Brennkraftmaschine vorgesehen sein, dass diese Schaltmittel zur Aktivierung/Deaktivierung des zweiten Events, d.h. des erneuten Öffnens des Auslassventils während des Ansaugtakts und/oder des Einlassventils während des Ausstoßtakts, umfasst. Bei deaktiviertem zweitem Event erfolgt keine Ventilüberschneidung und damit kein Scavenging.

Vorzugsweise sind die Auslassbetätigungsmittel und die Einlassbetätigungsmittel in Form von einer oder mehreren Nockenwellen ausgebildet. Alternativ können z.B. aber auch individuelle Aktoren (insbesondere elektromagnetischer Bauart) zur Betätigung der Einlass- und/oder Auslassventile eingesetzt werden.

Zur Erzielung des zweiten Events für das Einlass- und/oder Auslassventil kann dann vorgesehen sein, dass die Schaltmittel einen oder mehrere Zusatznocken der Nockenwelle(n) aktivieren oder deaktivieren.

Insbesondere kann/können die Nockenwelle(n) einen oder mehrere Nockenträger aufweisen, die auf einer Grundwelle (jeder) der Nockenwelle(n) längsaxial verschiebbar gelagert sind und eine erste Nockenkontur aufweisen, durch die das erneute Öffnen des Einlassventils und/oder des Auslassventils nicht bewirkt wird, und eine zweite Nockenkontur aufweisen, durch die das erneute Öffnen des Einlassventils und/oder des Auslassventils bewirkt wird. Die zweite Nockenkontur kann insbesondere derart ausgebildet sind, dass diese einen Hauptnocken, der das Öffnen des Auslassventils während des Ausstoßtakts bzw. des Einlassventils während des Ansaugtakts, bewirkt, sowie einen Zusatznocken aufweist, der das erneute Öffnen des Auslassventils während des Ansaugtakts bzw. des Einlassventils während des Ausstoßtakts bewirkt. Mittels der Schaltmittel können die Nockenträger in Abhängigkeit von dem Betriebszustand des Verbrennungsmotors so verschoben werden, dass die eine oder die andere Nockenkontur mit dem dazugehörigen Einlass- und/oder Auslassventil zusammenwirkt.

In einer weiterhin bevorzugten Ausgestaltung der erfindungsgemäßen Brennkraftmaschine kann vorgesehen sein, dass die Nockenwelle(n) als gemischte Nockenwelle(n) sowohl (mindestens) ein Einlassventil als auch (mindestens) ein Auslassventil für den (insbesondere jeden) Zylinder betätigt/-en.

Besonders vorteilhaft kann eine solche Ausgestaltung der Brennkraftmaschine in Verbindung mit einer Ausgestaltung der Nockenwelle(n) mit einem längsaxial verschiebbaren Nockenträger sein. Dadurch kann konstruktiv sehr einfach ein kombiniertes Scavenging während des Ansaug- und Ausstoßtakts erzielt werden. Insbesondere kann dabei mit einem einzelnen verschiebbaren Nockenträger (je Zylinder), der jeweils eine erste und eine zweite Nockenkontur für das dazu gehörige Einlass- bzw. Auslassventil aufweist, die gewünschte Umschaltung von "Normalbetrieb" (ohne Scavenging) zu Scavenging erreicht werden.

Das erfindungsgemäße Verfahren zum Wechsel der Betriebsart der Brennkraftmaschine von einem Normalbetrieb in einen Scavengingbetrieb umfasst die Verfahrensschritte Öffnen des Auslassventils mittels Auslassbetätigungsmitteln während eines Ausstoßtakts und Öffnen des Einlassventils mittels Einlassbetätigungsmitteln während eines Ansaugtakts. Durch diese Schritte wird die Brennkraftmaschine in einem für Viertakt-Verbrennungsmotoren konventionellen Normalbetrieb betrieben. Um die Brennkraftmaschine in den Scavengingbetrieb zu versetzen, wird mittels eines Schaltmittels ein erneutes Öffnen des Auslassventils durch die Auslassbetätigungsmittel während des Ansaugtakts in einem Zeitraum, wenn ein Druckgefälle vom Frischgasstrang zum Abgasstrang herrscht, aktiviert. Durch die Aktivierung des zusätzlichen Öffnens liegt in dem Scavengingbetrieb eine Ventilüberschneidung während des Ansaugtakts vor, welche das Durchspülen des Zylinders ermöglicht. In dem Normalbetrieb ist das zusätzliche Öffnen nicht aktiviert oder in anderen Worten deaktiviert, wodurch kein Spülen erfolgt.

Mit dem Verfahren kann demnach von einem Normalbetrieb in einen Scavengingbetrieb der Brennkraftmaschine gewechselt werden. Dies hat den Vorteil, dass in Betriebsbereichen der Brennkraftmaschine, in denen ein Scavengingbetrieb nicht sinnvoll ist, dieser nicht aktiviert bzw. deaktiviert wird und in Betriebsbereichen, in denen ein Scavengingbetrieb sinnvoll ist, dieser aktiviert werden kann. Vorzugsweise entscheidet über die Aktivierung ein Steuergerät der Brennkraftmaschine abhängig von der Lage des aktuellen Betriebspunktes der Brennkraftmaschine im Betriebskennfeld der Brennkraftmaschine.

Ein vorteilhaftes Verfahren sieht weiterhin vor, ein erneutes Öffnen des Einlassventils durch die Einlassbetätigungsmittel während des Ausstoßtakts in einem Zeitraum, wenn ein Druckgefälle vom Frischgasstrang zum Abgasstrang herrscht, zu aktivieren. Die Aktivierung erfolgt bevorzugt durch dasselbe Schaltmittel, welches das erneute Öffnen des Auslassventils durch die Auslassbetätigungsmittel aktiviert. Alternativ kann die Aktivierung des erneuten Öffnens des Einlassventils durch die Einlassbetätigungsmittel auch durch ein davon verschiedenes, weiteres Schaltmittel erfolgen.

Beim Wechsel der Brennkraftmaschine in den Scavengingbetrieb wird gemäß diesem Verfahren zusätzlich zu der Ventilüberschneidung im Ansaugtakt eine Ventilüberschneidung im Ausstoßtakt herbeigeführt, wodurch die bereits erläuterten Auswirkungen des Scavengings verstärkt werden können.

Schließlich besteht ein besonders einfaches und kostengünstiges Verfahren zum Wechsel einer Brennkraftmaschine in einen Scavengingbetrieb daraus, dass die Auslassbetätigungsmittel und die Einlassbetätigungsmittel in Form von einer oder mehrerer Nockenwellen ausgebildet sind, wobei eine Nockenwelle sowohl das Einlassventil als auch das Auslassventil betätigt und die Schaltmittel als ein axial auf einer Grundwelle verschiebbarer Nockenträger ausgebildet sind. Die Aktivierung des erneuten Öffnens des Einlassventils und des Auslassventils eines Zylinders kann dann durch das Verschieben nur eines Nockenträgers bewirkt werden. Die genaue Funktionsweise eines verschiebbaren Nockenträgers ist in der Schrift DE 10 2011 014 308 A1 der Öffentlichkeit zugänglich. Der Offenbarungsgehalt dieser Schrift DE 10 2011 014 308 A1 ist durch Bezugnahme in diese Darstellung aufgenommen.

Die Erfindung wir nachfolgend anhand eines in den Zeichnungen dargestellten Ausführungsbeispiels näher erläutert. In den Zeichnungen zeigt:
- Fig. 1:: in einer schematischen Darstellung die wesentlichen Komponenten einer Brennkraftmaschine, deren Betriebsart durch das erfindungsgemäße Verfahren gewechselt werden kann;
- Fig. 2:: in einem Diagramm den Verlauf der Ventilhübe (in mm) eines Einlass- und eines Auslassventil der Brennkraftmaschine über zwei Umdrehungen der Kurbelwelle bei der Verwirklichung von Scavenging;
- Fig. 3:: in einem Diagramm den Druckverlauf (in bar) im Frischgas- und Abgasstrang der Brennkraftmaschine über zwei Umdrehungen der Kurbelwellen bei der Verwirklichung von Scavenging;
- Fig. 4:: in einem Diagramm den Massenstrom (in g/s) im Frischgas- und Abgasstrang der Brennkraftmaschine über zwei Umdrehungen der Kurbelwellen bei der Verwirklichung von Scavenging; und
- Fig. 5:: in einer schematischen Darstellung Teile eines Ventiltriebs der Brennkraftmaschine.

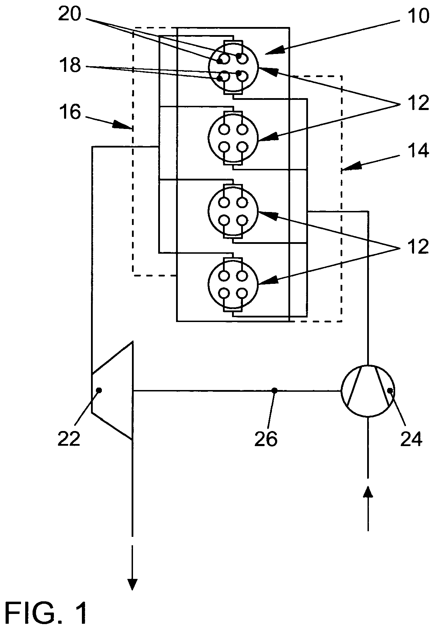

In der Fig. 1 ist stark vereinfacht eine erfindungsgemäße Brennkraftmaschine dargestellt. Mittels der Brennkraftmaschine kann beispielsweise ein Kraftfahrzeug angetrieben werden.

Die Brennkraftmaschine umfasst einen Verbrennungsmotor 10, der als Viertakt-Hubkolbenmotor nach dem Diesel-Prinzip betrieben wird. Demnach umfasst der in jedem Zylinder des Verbrennungsmotors 10 umgesetzte Kreisprozess vier Takte: (1) Ansaugen, (2) Verdichten (und Zünden), (3) Arbeiten bzw. Expandieren und (4) Ausstoßen.

Der Verbrennungsmotor 10 bildet in einem Verbund aus Zylinderkurbelgehäuse und Zylinderkopf mehrere (hier: vier) Zylinder 12 aus. Die Zylinder 12 sind einlassseitig mit einem Saugrohr 14 eines Frischgasstrangs und ausgangsseitig mit einem Abgaskrümmer 16 eines Abgasstrangs gasführend verbunden. In bekannter Weise wird in Brennkammern, die von den Zylindern 12 in Verbindung mit in den Zylinder 12 auf und ab geführten Kolben ausgebildet sind, Frischgas (Luft) mit Kraftstoff verbrannt. Das dabei entstehende Abgas wird über den Abgasstrang abgeführt. Die Zufuhr des Frischgases in die Brennräume und die Abfuhr des Abgases aus den Brennräumen wird über jeweils zwei Einlassventile 18 und zwei Auslassventile 20 je Zylinder 12 gesteuert, die von einem in der Fig. 1 nicht dargestellten Ventiltrieb des Verbrennungsmotors 10 betätigt werden.

Der Ventiltrieb umfasst eine Kurbelwelle, die mit den Kolben über Pleuel verbunden ist und von der periodischen Linearbewegung der Kolben rotierend angetrieben wird. Die Rotation der Kurbelwelle wird über ein Getriebe auf zwei Nockenwellen übertragen, von denen jede über beispielsweise Kipphebel zwei Ventile jedes Zylinders betätigt. Die Nockenwellen sind dabei als sogenannte gemischte Nockenwellen ausgebildet, d.h. jede von diesen betätigt sowohl ein Einlassventil 18 als auch ein Auslassventil 20 jedes Zylinders 12. Dies wird mittels eines sogenannten gedrehten Ventilsterns erreicht, bei dem die Anordnung der Einlassventile 18 und der Auslassventile 20 gegenüber der Anordnung bei konventionellen Ventiltrieben, bei denen eine Nockenwelle alle Einlassventile und eine zweite Nockenwelle alle Auslassventile betätigt, um 90° verdreht sind.

Die Brennkraftmaschine umfasst weiterhin einen Abgasturbolader. Dieser weist eine in den Abgasstrang integrierte Turbine 22 sowie einen in den Frischgasstrang integrierten Verdichter 24 auf. Ein von dem Abgasstrom rotierend angetriebenes Laufrad der Turbine 22 treibt über eine Welle 26 ein Laufrad des Verdichters 24 an. Die so bewirkte Rotation des Laufrads des Verdichters 24 verdichtet das durch diesen hindurch geführte Frischgas.

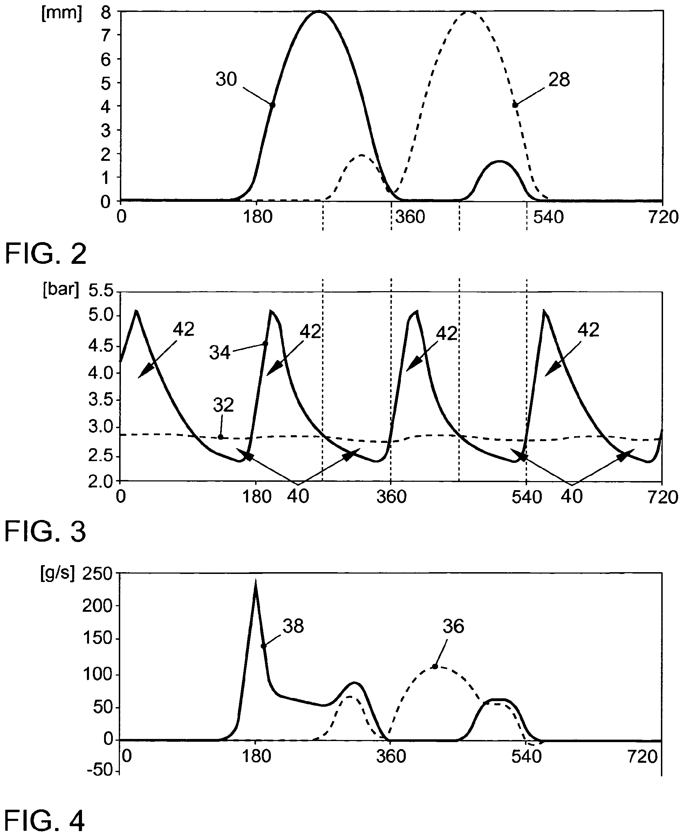

Die Fig. 2 zeigt in einem Diagramm den Verlauf der Ventilhübe eines Einlassventils 18 (gestrichelte Linie 28) sowie eines Auslassventils 20 (durchgezogene Linie 30) eines Zylinders über dem Verlauf von zwei Umdrehungen (0° bis 720°) der Kurbelwelle (entspricht einer Umdrehung der die Einlassventile 18 und Auslassventile 20 steuernden Nockenwellen).

Die Fig. 3 zeigt in einem Diagramm den Verlauf des (Absolut-)Drucks in einem motornahen Abschnitt (z.B. dem Saugrohr 14) des mit allen Zylindern 12 des Verbrennungsmotors 10 verbundenen Frischgasstrangs (gestrichelte Linie 32) sowie in einem motornahen Abschnitt (z.B. dem Abgaskrümmer 16) des mit allen Zylindern 12 des Verbrennungsmotors 10 verbundenen Abgasstrangs (durchgezogene Linie 34), wiederum über dem Verlauf von zwei Umdrehungen der Kurbelwelle.

In dem Diagramm der Fig. 4 ist der entsprechende Verlauf des Massenstroms in demselben Abschnitt des Frischgasstrangs (gestrichelte Linie 36) und des Abgasstrangs (durchgezogene Linie 38) dargestellt.

Wie sich aus der Fig. 3 ergibt, ist der Druckverlauf im Frischgasstrang vergleichsweise konstant, während derjenige im Abgasstrang relativ stark schwankt, wobei der Druck im Abgasstrang phasenweise unterhalb (Unterdruckbereiche 40) und phasenweise oberhalb (Überdruckbereiche 42) des Drucks im Frischgasstrang liegt. Dabei kommen auf zwei Umdrehungen der Kurbelwelle infolge der insgesamt vier mit dem Frischgas- und dem Abgasstrang verbundenen Zylinder vier Überdruckbereiche 42 und vier Unterdruckbereiche 40.

Liegt der Druck im Abgasstrang unterhalb des Drucks im Frischgasstrang, besteht ein Druckgefälle vom Frischgasstrang zum Abgasstrang, das bei gleichzeitig geöffneten Einlass- 18 und Auslassventilen 20 der einzelnen Zylinder 12 ein Scavenging bewirken kann. Ein Scavenging wird realisiert, indem ein sogenanntes zweites Event für die von einer der zwei Nockenwellen betätigten Einlassventile 18 und Auslassventile 20 erzeugt wird. Dazu werden zum einen die entsprechenden Einlassventile 18 - zusätzlich zu dem Hauptöffnen während des Ansaugtakts (360° bis 540°) - auch in ca. der zweiten Hälfte des Ausstoßtakts (180° bis 360°) und somit zeitgleich mit den Auslassventilen 20 geöffnet. Zum anderen werden die entsprechenden Auslassventile 20 - zusätzlich zu dem Hauptöffnen während des Ausstoßtakts - auch in ca. der zweiten Hälfte des Ansaugtakts und somit zeitgleich mit den entsprechenden Einlassventilen 18 geöffnet. In beiden Fällen erfolgt das Öffnen beim zweiten Event mit deutlich geringerem Hub als dies für das Hauptöffnen vorgesehen ist.

Das zweite Event erfolgt jeweils in einer Phase, in der ein Druckgefälle vom Frischgasstrang zum Abgasstrang herrscht (Unterdruckbereiche 40 in der Fig. 3). Dieses Druckgefälle bewirkt ein Überströmen von Frischgas in den Abgasstrang und somit einen erhöhten Massenstrom im Abgas- und damit auch im Frischgasstrang. Dieser erhöhte Massenstrom bewirkt eine höhere Leistung des Abgasturboladers und damit eine Erhöhung des von dem Verbrennungsmotor 10 erzeugbaren Drehmoments. Zudem kann das Scavenging (zumindest das Scavenging während des Ausstoßtakts) ein Ausspülen von in den Zylindern 12 befindlichem Restgas in den Abgasstrang unterstützen. Dadurch kann die Menge des in den Zylindern 12 enthaltenen Frischgases und damit auch die Menge des umsetzbaren Kraftstoffs erhöht werden. Dies unterstützt wiederum die Erzielung eines hohen Drehmoments durch den Verbrennungsmotor 10.

Ein Scavenging ist insbesondere in einem Betriebsbereich des Verbrennungsmotors 10 vorgesehen, der durch niedrige Drehzahlen und mittlere bis hohe Lasten gekennzeichnet ist. In den übrigen Betriebsbereichen (d.h. insbesondere immer bei mittleren bis hohen Drehzahlen) soll dagegen kein Scavenging durchgeführt werden. Somit wird dann weder für die Einlassventile 18 noch für die Auslassventile 20 ein zweites Event realisiert.

Da vorgesehen ist, das Scavenging während des Ausstoßtakts einerseits und während des Ansaugtakts andererseits immer gleichzeitig zu verwirklichen, kann die Aktivierung bzw. Deaktivierung des zweiten Events für die Einlassventile 18 und Auslassventile 20 synchron erfolgen. Durch die Ausgestaltung der Brennkraftmaschine mit gedrehtem Ventilstern kann eine solche synchrone Aktivierung/Deaktivierung konstruktiv einfach umgesetzt werden.

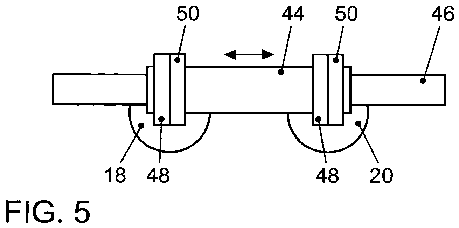

Dazu ist vorgesehen, dass diejenige Nockenwelle, über die das zweite Event für die entsprechenden Einlassventile 18 und Auslassventile 20 realisiert wird, einen Nockenträger 44 für jeden der Zylinder 12 umfasst (vgl. Fig. 5). Die Nockenträger 44 sind axial auf einer Grundwelle 46 der Nockenwelle verschiebbar gelagert und weisen für beide den einzelnen Nockenträgern 44 zugeordneten Ventile zwei unterschiedliche Nockenkonturen auf. Eine erste Nockenkontur 48 umfasst lediglich einen Hauptnocken (nicht dargestellt), der im Fall des Einlassventils 18 das Öffnen während des Ansaugtakts und im Fall des Auslassventils 20 das Öffnen während des Ausstoßtakts bewirkt (Hauptöffnen). Die jeweils axial zu der ersten Nockenkontur 48 versetzt angeordnete zweite Nockenkontur 50 umfasst neben einem Hauptnocken (nicht dargestellt) einen Zusatznocken (nicht dargestellt), der das jeweilige zweite Event bewirkt.

Über nicht dargestellte Schaltmittel können die Nockenträger 44 auf dem Grundträger 46 verschoben werden, wodurch - je nach Betriebsbereich, in dem der Verbrennungsmotor 10 betrieben wird - entweder die ersten Nockenkonturen 48 oder die zweiten Nockenkonturen 50 mit den die Ventile betätigenden Kipphebeln in Wechselwirkung gebracht werden. Details zum Aufbau und zur Funktionsweise der Schaltmittel für die schaltbare Nockenwelle können beispielsweise der DE 10 2011 014 308 A1 entnommen werden.

## Patentansprüche

1. Verfahren zum Wechsel der Betriebsart einer Brennkraftmaschine mit einem Viertakt-Verbrennungsmotor (10), einem Frischgasstrang und einem Abgasstrang von einem Normalbetrieb in einen Scavengingbetrieb, wobei für einen Zylinder (12) des Verbrennungsmotors (10) die Zufuhr von Frischgas mittels eines Einlassventils (18) gesteuert wird und die Abfuhr von Abgas mittels eines Auslassventils (20) gesteuert wird, umfassend die Verfahrensschritte Öffnen des Auslassventils (20) mittels Auslassbetätigungsmitteln während eines Ausstoßtakts, Öffnen des Einlassventils (18) mittels Einlassbetätigungsmitteln während eines Ansaugtakts, **dadurch gekennzeichnet, dass** mittels eines Schaltmittels ein erneutes Öffnen des Auslassventils (20) durch die Auslassbetätigungsmittel während des Ansaugtakts in einem Zeitraum, wenn ein Druckgefälle vom Frischgasstrang zum Abgasstrang herrscht, aktiviert wird.

2. Verfahren zum Wechsel der Betriebsart einer Brennkraftmaschine mit einem Viertakt-Verbrennungsmotor (10), einem Frischgasstrang und einem Abgasstrang von einem Normalbetrieb in einen Scavengingbetrieb nach Anspruch 1, **dadurch gekennzeichnet, dass** ein erneutes Öffnen des Einlassventils (18) durch die Einlassbetätigungsmittel während des Ausstoßtakts in einem Zeitraum, wenn ein Druckgefälle vom Frischgasstrang zum Abgasstrang herrscht, aktiviert wird.

3. Verfahren zum Wechsel der Betriebsart einer Brennkraftmaschine mit einem Viertakt-Verbrennungsmotor (10), einem Frischgasstrang und einem Abgasstrang von einem Normalbetrieb in einen Scavengingbetrieb nach Anspruch 2, **dadurch gekennzeichnet, dass** die Auslassbetätigungsmittel und die Einlassbetätigungsmittel in Form von einer oder mehrerer Nockenwellen ausgebildet sind, eine Nockenwelle sowohl das Einlassventil (18) als auch das Auslassventil (20) betätigt, die Schaltmittel als ein axial auf einer Grundwelle (46) verschiebbarer Nockenträger (44) ausgebildet sind und die Aktivierung des erneuten Öffnens des Einlassventils (18) und des Auslassventils (20) durch Verschieben des Nockenträgers (44) bewirkt wird.

## Claims

1. Method for changing the operating mode of a combustion machine having a four-stroke internal combustion engine (10), having a fresh-gas tract and having an exhaust-gas tract from a normal mode into a scavenging mode, wherein, for a cylinder (12) of the internal combustion engine (10), the supply of fresh gas is controlled by way of an inlet valve (18), and the discharge of exhaust gas is controlled by way of an outlet valve (20), comprising the method steps of opening the outlet valve (20) by way of outlet actuation means during an exhaust stroke, and opening the inlet valve (18) by way of inlet actuation means during an intake stroke, **characterized in that**, by way of a switching means, a renewed opening of the outlet valve (20) by the outlet actuation means is activated during the intake stroke in a time period when a pressure gradient from the fresh-gas tract to the exhaust-gas tract prevails.

2. Method for changing the operating mode of a combustion machine having a four-stroke internal combustion engine (10), having a fresh-gas tract and having an exhaust-gas tract from a normal mode into a scavenging mode, according to Claim 1, **characterized in that** a renewed opening of the inlet valve (18) by the inlet actuation means is activated during the exhaust stroke in a time period when a pressure gradient from the fresh-gas tract to the exhaust-gas tract prevails.

3. Method for changing the operating mode of a combustion machine having a four-stroke internal combustion engine (10), having a fresh-gas tract and having an exhaust-gas tract from a normal mode into a scavenging mode, according to Claim 2, **characterized in that** the outlet actuation means and the inlet actuation means are in the form of one or more camshafts, one camshaft actuates both the inlet valve (18) and the outlet valve (20), the switching means are in the form of a cam carrier (44) which is axially displaceable on a main shaft (46), and the activation of the renewed opening of the inlet valve (18) and of the outlet valve (20) is effected by displacement of the cam carrier (44).

## Revendications

1. Procédé pour changer le mode de fonctionnement d'un moteur à combustion interne, comprenant un moteur à combustion interne à quatre temps (10), une ligne de gaz frais et une ligne de gaz d'échappement, d'un mode normal dans un mode de récupération, l'alimentation en gaz frais étant commandée au moyen d'une soupape d'admission (18) pour un cylindre (12) du moteur à combustion interne (10) et l'évacuation de gaz d'échappement étant commandée au moyen d'une soupape d'échappement (20), le procédé comprenant les étapes de procédé suivantes : ouverture de la soupape d'échappement (20) au moyen de moyens d'actionnement d'échappement pendant une course d'échappement, ouverture de la soupape d'admission (18) au moyen de moyens d'actionnement d'admission pendant une course d'admission, **caractérisé en ce qu'**une nouvelle ouverture de la soupape d'échappement (20) est activée au moyen d'un moyen de commutation par les moyens d'actionnement d'échappement pendant le temps d'admission pendant un intervalle de temps durant lequel il règne un gradient de pression entre la ligne de gaz frais et la ligne de gaz d'échappement.

2. Procédé pour changer le mode de fonctionnement d'un moteur à combustion interne, comprenant un moteur à combustion interne à quatre temps (10), une ligne de gaz frais et une ligne de gaz d'échappement, d'un mode normal dans un mode de récupération selon la revendication 1, **caractérisé en ce qu'**une nouvelle ouverture de la soupape d'admission (18) est activée par les moyens d'actionnement d'admission pendant la course d'échappement pendant un intervalle de temps durant lequel il règne un gradient de pression entre la ligne de gaz frais et la ligne de gaz d'échappement.

3. Procédé pour changer le mode de fonctionnement d'un moteur à combustion interne, comprenant un moteur à combustion interne à quatre temps (10), une ligne de gaz frais et une ligne de gaz d'échappement, d'un mode normal dans un mode de récupération selon la revendication 2, **caractérisé en ce que** les moyens d'actionnement d'échappement et les moyens d'actionnement d'admission sont réalisés sous la forme d'un ou de plusieurs arbres à cames, un arbre à cames actionnant à la fois la soupape d'admission (18) et la soupape d'échappement (20), les moyens de commutation étant réalisés sous la forme d'un support de came (44) pouvant être déplacé axialement sur un arbre de base (46) et l'activation de la nouvelle ouverture de la soupape d'admission (18) et de la soupape d'échappement (20) étant provoquée par déplacement du support de came (44).
